# EUROPEAN PATENT APPLICATION

(11) **EP 3 708 319 A1**
(43) Date of publication of application: **16.09.2020**
(21) Application number: 19197979.8
(22) Date of filing: 18.09.2019
(51) Int. Cl.: B27N 1/00, B27N 3/00, B27N 3/02, B27N 3/18

(54) **BAMBOO STRIP SUBSTRATE BOARD AND PREPARATION METHOD THEREOF, BAMBOO STRIP FLOOR AND APPLICATION THEREOF**

(30) Priority: 14.03.2019 CN 201910194060
(71) Applicant: Fujian Heqizu Forestry Science and Technology Co., Ltd., Yong'an, Fujian 366000 (CN)
(72) Inventor: YU, Xianlu, Yong an, Fujian 366000 (CN); WANG, Zheng, Yong an, Fujian 366000 (CN); WU, Huanggui, Yong an, Fujian 366000 (CN); XIAO, Weihong, Yong an, Fujian 366000 (CN); YU, Yan, Yong an, Fujian 366000 (CN)
(74) Representative: Isern Patentes y Marcas S.L.

(57) **Abstract**

The present invention provides a bamboo strip substrate board and a preparation method thereof, a bamboo strip floor and application thereof, and relates to the technical field of floor manufacturing. The method for preparing a bamboo strip substrate board provided by the present invention includes the following steps: placing a bamboo strip curtain in a glue-containing solution for glue dipping and draining glue to obtain a glue-containing bamboo strip curtain; drying the glue-containing bamboo strip curtain and then performing assembly to obtain a bamboo strip board blank; and subjecting the bamboo strip board blank to hot pressing to obtain a bamboo strip substrate board. According to the present invention, an outdoor bamboo-based floor is further prepared on the basis of a bamboo strip substrate board. Since the bamboo strip retains the basic structure of the bamboo material, compared with a conventional reconsolidated bamboo, the bamboo strip has much lower density, less glue used, lower hot pressing pressure in the board forming process, and a simplified preparation process, so the production cost is effectively reduced, and the weather resistance of the floor is improved.

## Description

### TECHNICAL FIELD

The present invention relates to the technical field of floor manufacturing, and in particular to a bamboo strip substrate board and a preparation method thereof, a bamboo strip floor and application thereof.

### BACKGROUND

An outdoor floor, also known as outdoor flooring board, is a widely used outdoor flooring material. The outdoor floor is widely used in garden landscapes, outdoor walkways, green space (wetland) parks, national forest parks, cruise wharves, outdoor landscapes of middle and top grade villas, outdoor greening of top ends of high-rise buildings, sunlight rooms, and the like.

A bamboo outdoor floor is a novel outdoor flooring material that has developed rapidly in recent years. In the prior art, a floor is mainly composed of a reconsolidated bamboo (also known as strand woven bamboo) material. A main preparation process includes removing bamboo outer skin and tabasheer in bamboo strips, rolling the bamboo strips after the removal of the bamboo outer skin and the tabasheer about ten times (bamboo fiber bundle, or "bamboo bundles"), and subjecting the rolled bamboo filaments to high temperature carbonization. In the process of preparation of the reconsolidated bamboo, the bamboo strips are rolled into bamboo filaments, and the subsequent carbonization process weakens the strength of the bamboo fiber. Therefore, in the subsequent floor manufacturing process, only by increasing the amount of glue applied and increasing the density of the board can use performance indexes be ensured. Usually, 1.2-1.3 tons of bamboo material is required for each cubic meter of board, the material consumption is much, and the cost is high. In addition, the outdoor floor composed of the reconsolidated bamboo is easily subjected to bamboo filament degumming and upwarp in use, and the weather resistance is also difficult to meet the requirements of users.

### SUMMARY

An objective of the present invention is to provide a bamboo strip substrate board and a preparation method thereof, a bamboo strip floor and application thereof. The method for preparing a bamboo strip substrate board provided by the present invention is simple in process, which greatly reduces the amount of glue used and the amount of bamboo material used in the preparation process, reduces the cost, and improves the weather resistance of the floor.

In order to achieve the foregoing invention objective, the present invention provides the following technical solutions:
The present invention provides a method for preparing a bamboo strip substrate board, including the following steps:
step (1): placing a bamboo strip curtain in a glue-containing solution for glue dipping and draining glue to obtain a glue-containing bamboo strip curtain;
step (2): drying the glue-containing bamboo strip curtain in the step (1) and then performing assembly to obtain a bamboo strip board blank; and
step (3): subjecting the bamboo strip board blank in the step (2) to hot pressing to obtain a bamboo strip substrate board.

Preferably, the glue-containing solution in the step (1) includes an adhesive and a preservative; the adhesive is one or more of a phenolic adhesive, a resorcinol-formaldehyde adhesive and an MDI ecological adhesive; and the preservative is a boron-based preservative and/or a fluorine-based preservative.

Preferably, the time of the glue dipping in the step (1) is 5-20 min.

Preferably, the temperature of the drying in the step (2) is 70-90°C, and the drying time is 20-30 min.

Preferably, the density of the bamboo strip substrate board in the step (3) is 0.9-1.05 g/cm³.

Preferably, the temperature of the hot pressing in the step (3) is 140-160°C, and the pressure of the hot pressing is 2-4 MPa.

Preferably, the ratio of the thickness of the bamboo strip substrate board to the thickness of the bamboo strip board blank in the step (3) is 1:(1.2-1.4).

The present invention provides a bamboo strip substrate board prepared by using the preparation method of the aforementioned solution.

The present invention provides a method for preparing a bamboo strip substrate board, including the following steps: placing a bamboo strip curtain in a glue-containing solution for glue dipping and draining glue to obtain a glue-containing bamboo strip curtain; drying the glue-containing bamboo strip curtain and then performing assembly to obtain a bamboo strip board blank; and subjecting the bamboo strip board blank to hot pressing to obtain a bamboo strip substrate board. The present invention adopts the bamboo strip as a raw material to prepare a substrate board. Since the bamboo strip retains the basic structure of the bamboo material, compared with a conventional reconsolidated bamboo, the bamboo strip has much lower density, less glue used, lower hot pressing pressure in the board forming process, and a simplified preparation process, so the production cost is effectively reduced; meanwhile, the density distribution evenness inside the substrate board is improved by combination with a glue dipping, drying, assembly and hot pressing process, the strength of the substrate board and the rate of finished products are improved, the problem of degumming and upwarp of bamboo filaments on the surface of the board in the process of use of a reconsolidated bamboo floor is also solved, and the weather resistance of the floor is improved. It can be seen from the test results of embodiments that the amount of bamboo used for preparing the substrate board by using the method of the present invention is reduced by 23-31%, the amount of glue used is saved by 10-20%, and the uniformity of the board density and the rate of finished products are greatly improved.

The present invention further provides a bamboo strip floor which is obtained by sequentially subjecting the bamboo strip substrate board prepared by using the preparation method of the aforementioned solution to fixed-thickness sanding, surface milling, anti-corrosion and anti-mold treatment, and coating treatment. In the present invention, by means of the advantages of low density and good weather resistance of the bamboo strip substrate board, the amount of bamboo and glue used is saved on the basis of ensuring floor strength and hardness, the production cost is reduced, and the weather resistance of the floor is improved, which is favorable for environmental protection.

The present invention further provides application of the bamboo strip floor according to the aforementioned solution as an outdoor flooring material. The bamboo strip floor provided by the present invention can resist rough weather of outdoor wind, rain and sun, and the service life of the floor is improved.

### DETAILED DESCRIPTION

The present invention provides a method for preparing a bamboo strip substrate board, including the following steps:
Step (1): place a bamboo strip curtain in a glue-containing solution for glue dipping and drain glue to obtain a glue-containing bamboo strip curtain.
Step (2): dry the glue-containing bamboo strip curtain in the step (1) and then perform assembly to obtain a bamboo strip board blank.
Step (3): subject the bamboo strip board blank in the step (2) to hot pressing to obtain a bamboo strip substrate board.

In the present invention, a bamboo strip curtain is placed in a glue-containing solution for glue dipping and the glue is drained to obtain a glue-containing bamboo strip curtain. In the present invention, a process for preparing the bamboo strip curtain is not particularly limited, and a conventional method for preparing the bamboo strip curtain in the art can be used. In the present invention, the bamboo strip curtain is preferably obtained by sequentially subjecting a bamboo material to bamboo splitting, bamboo strip splitting, curtain weaving and drying. In the present invention, the drying is preferably hot air drying, and the temperature of the drying is preferably 80-100°C. The present invention does not particularly limit the time of the drying, as long as it is ensured that the moisture content meets the requirements. In the present invention, the moisture content of the bamboo strip curtain is preferably 6-10%; the thickness of a bamboo strip in the bamboo strip curtain is preferably 1.5-2.5 mm; the thickness of the bamboo strip curtain is preferably 2 mm; the length of the bamboo strip curtain is preferably 2-3 m, more preferably 2.5 m; and the width of the bamboo strip curtain is preferably 1-2 m, more preferably 1.3 m

In the present invention, the glue-containing solution preferably includes an adhesive and a preservative; the adhesive is preferably one or more of a phenolic adhesive, a resorcinol-formaldehyde adhesive and an MDI ecological adhesive; and the preservative is preferably a boron-based preservative and/or a fluorine-based preservative; and the ratio of the mass of the adhesive to the mass of the preservative is preferably (4-8):(2-3), more preferably (4-8):2. In a specific embodiment of the present invention, the glue-containing solution includes, by weight parts, 100 parts of phenolic adhesive (with a solid content of 45-48%), 2 parts of boric acid, 2 parts of borate, 3 parts of sodium fluoride preservative and 20 parts of water; or 75 parts of 45wt% phenolic adhesive, 10 parts of MDI ecological adhesive, 15 parts of sodium fluoride preservative and 40 parts of water. In the present invention, the phenolic adhesive belongs to weather-resistant adhesives; and the boric acid, the borax and the sodium fluoride preservative have corrosion resistance. In the present invention, a bamboo strip curtain is immersed in the aforementioned glue-containing solution, so that the weather resistance and corrosion resistance of the bamboo strip curtain are improved while an adhesion force between the bamboo strip curtains can be ensured, thereby improving the weather resistance and corrosion resistance of the bamboo strip substrate board.

In the present invention, the ratio of the mass of the bamboo strip curtain to the mass of the adhesive is preferably 10:1. The preparation method of the present invention can significantly reduce the amount of the adhesive used and save the cost, and is also environmentally friendly.

In the present invention, the time of the glue dipping is preferably 5-20 min, more preferably 5 min. The present invention limits the glue dipping time to the above range, which is beneficial to fully coating the surface of the bamboo strip curtain with glue, and the bamboo strip curtains are bonded to each other in the subsequent hot pressing process, and the structure of the bamboo strip curtain is not damaged.

In the present invention, after the bamboo strip curtain is dipped in glue, the glue is drained. In the present invention, a specific method for glue draining is not particularly limited, and a conventional glue draining method in the art can be used. In the present invention, the glue-containing solution on the surface of the bamboo strip curtain is drained, which is favorable for improving the adhesion force of the bamboo strip curtain.

After the glue-containing bamboo strip curtain is obtained, in the present invention, the glue-containing bamboo strip curtain is dried and then assembled to obtain a bamboo strip board blank. In the present invention, the temperature of the drying is preferably 70-90°C, more preferably 80°C; and the time of the drying is preferably 20-30 min, more preferably 25 min. In the present invention, the moisture in the glue-containing solution is removed from the surface of the bamboo strip curtain by drying, while the excessive curing failure of the adhesive is avoided. The mode of the assembly is not particularly limited in the present invention. In the present invention, it is preferable to perform assembly in a consequent stacking mode, and such an assembly mode sets the structure according to the load-bearing direction of the floor.

After a bamboo strip board blank is obtained, in the present invention, the bamboo strip board blank is subjected to hot pressing to obtain a bamboo strip substrate board. In the present invention, the density of the bamboo strip substrate board is 0.9-1.05 g/cm³, more preferably 1.0 g/cm³. The present invention limits the density of the bamboo strip substrate board to the above range, and the effect is to improve the mechanical strength of the board while saving the bamboo material.

In the present invention, the temperature of the hot pressing is preferably 140-160°C, more preferably 150°C; the time of the hot pressing is preferably 1-1.5 min/mm, more preferably 1 min/mm; and the pressure of the hot pressing is preferably 2-4 MPa, more preferably 2.5 MPa. The ratio of the thickness of the bamboo strip substrate board to the thickness of the bamboo strip board blank is 1:(1.2-1.4), more preferably 1:1.2.

In the present invention, the hot pressing is preferably carried out in a mode of upper and lower cooling, and specific steps include: pushing the bamboo strip board blank into a hot press of a normal temperature, raising the pressure to a specified hot pressing pressure, and at the same time, raising the temperature; when the temperature of the hot press reaches the temperature of the hot pressing, maintaining the temperature for a period of time, and then using cold water to cool the upper and lower surfaces of the hot press; and when the hot press is cooled to 50°C, opening the hot press to take out the bamboo strip substrate board. The present invention adopts cold water to cool the hot press, and can prevent the risk of board explosion caused by high temperature and high pressure when the hot press releases pressure and is opened.

In the present invention, the bamboo strip board blank may also be bonded to a glue dipping wood veneer, and then hot pressing is carried out to obtain the bamboo strip substrate board. In the present invention, the glue dipping wood veneer is preferably obtained by immersing a wood veneer in a glue-containing solution for glue dipping, and the glue-containing solution is preferably the same as a glue-containing solution used for a glue draining bamboo strip curtain. In the present invention, the ratio of the thickness of the bamboo strip board blank to the thickness of the glue dipping wood veneer is (5-7):(1-3), more preferably 7:3; for the stacking positions of the bamboo strip board blank and the glue dipping wood veneer, it is preferably to use the bamboo strip board blank as a secondary outer layer and use the glue dipping wood veneer as a core layer, and carry out stacking in a consequent stacking mode. In the present invention, a method for hot pressing after the bonding of the bamboo strip board blank to the glue dipping wood veneer is preferably the same as the aforementioned method for hot pressing of the bamboo strip board blank, and details are no longer repeated.

In the present invention, after the bamboo strip board blank is subjected to hot pressing, the method preferably further includes curing, cutting and storage. In the present invention, the curing is preferably carried out at a normal temperature in the absence of light, and the normal temperature is preferably 15-25°C; and the time of the curing is preferably 10-15 days. During the curing process, the moisture content of the bamboo strip substrate board can be balanced with the moisture content in the air to prevent deformation of the board.

The present invention does not particularly limit a mode of the cutting and a specific size, as long as the bamboo strip substrate board that conforms to the dimensional requirements is obtained.

In the present invention, when the bamboo strip substrate board is stored, the relative humidity of the air in a warehouse should be substantially consistent with the relative humidity of the atmosphere outside the warehouse. In the storage process, the moisture content of the bamboo strip substrate board is further balanced with the relative humidity in the air. According to different relative humidity of the air, the equilibrium moisture content of the bamboo strip substrate board is maintained at 9-16% to prevent cracking and deformation of the board.

The present invention provides a bamboo strip substrate board prepared by using the preparation method of the aforementioned solution.

The present invention further provides a bamboo strip floor which is obtained by sequentially subjecting the bamboo strip substrate board according to the aforementioned solution to fixed-thickness sanding, surface milling, anti-corrosion and anti-mold treatment, and coating treatment.

The present invention does not particularly limit the fixed-thickness sanding, surface milling, anti-corrosion and anti-mold treatment, and coating treatment, and a conventional operation process in the art can be used.

The present invention performs fixed-thickness sanding on the surface of the bamboo strip substrate board, and the precision of the size of the bamboo strip substrate board can be improved. In the present invention, the thickness of the bamboo strip substrate board after the fixed-thickness sanding is preferably 20-40 mm.

In the present invention, the bamboo strip substrate board can be subjected to surface milling according to customers' requirements. Specifically preferably, four-side planing and milling are used to form edge shapes on the sides of the bamboo strip substrate board, such as grooves for connection, or various shapes such as non-sliding grooves on the surface of the bamboo strip substrate board.

In the present invention, the anti-corrosion and anti-mold treatment preferably means that the bamboo strip substrate board is immersed in an anti-corrosion and anti-mold solution, and then aired. In the present invention, the anti-corrosion and anti-mold solution is preferably prepared from components including, by weight parts, 3 parts of boric acid, 3 parts of borate, 4 parts of sodium fluoride preservative and 40-50 parts of water. In the present invention, the time of the glue dipping is preferably 10-20 min; and the airing is preferably natural airing. According to the present invention, by the anti-corrosion and anti-mold treatment on the bamboo strip substrate board, the corrosion resistance of the bamboo strip floor can be improved, and the service life is prolonged.

In the present invention, the coating treatment is preferably to coat the bamboo strip substrate board after the anti-corrosion and anti-mold treatment with a weather-resistant coating. In the present invention, the weather-resistant coating is preferably one or more of acrylic paint, polyurethane paint, and wood wax oil. The present invention does not particularly limit the coating thickness, as long as the surface of the bamboo strip substrate board is completely covered. In the present invention, preferably, the bamboo strip substrate board is coated with the weather-resistant coating twice and then naturally aired to obtain a bamboo strip floor. In the present invention, the weather-resistant coating is cured into a film in the airing process, and the decoration and weather resistance of the bamboo strip floor can be improved.

The present invention further provides application of the bamboo strip floor as an outdoor flooring material according to the aforementioned solution. In the present invention, the bamboo strip floor is used as an outdoor flooring material for parks, outdoor walkways, wharves, top ends of high-rise buildings and the like. The bamboo strip floor provided by the present invention can resist rough weather of outdoor wind, rain and sun, and the service life of the floor is improved; and the bamboo strip floor provided by the present invention has a good decorative effect and has the function of beautifying the environment.

The technical solutions in the present invention will be clearly and completely described below in conjunction with the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

### 1. Preparation of a bamboo strip substrate board

Make a bamboo material into a bamboo strip curtain by bamboo splitting, bamboo strip splitting, curtain weaving and drying; where a bamboo strip in the bamboo strip curtain has a thickness of 1.5 mm, a length of 2.5 m and a width of 1.3 m; the bamboo strip curtain has a thickness of 2 mm; the drying is hot air drying performed in a drying kiln, the drying temperature is 80°C, and the moisture content of the bamboo strip curtain after drying is 8%.

After the dry bamboo strip curtain is obtained, place the bamboo strip curtain in a glue-containing solution composed of, by weight parts, 100 parts of 45wt% phenolic adhesive, 2 parts of boric acid, 2 parts of borate, 3 parts of sodium fluoride preservative and 20 parts of water for glue dipping for 5 min, and then take out the dry bamboo strip curtain, and drain the glue-containing solution to obtain a glue-containing bamboo strip curtain; where the ratio of the mass of the bamboo strip curtain to the mass of the phenolic adhesive is 10:1.

After the glue-containing bamboo strip curtain is obtained, place the glue-containing bamboo strip curtain in a mesh belt dryer for secondary drying, where the drying temperature is 70°C, and the drying time is 25 min; then assemble the dried glue-containing bamboo strip curtains in a consequent stacking mode to form a bamboo strip board blank, where the thickness of the obtained bamboo strip board blank is 30 mm.

After the bamboo strip board blank is obtained, push the bamboo strip board blank into a hot press of a normal temperature, raise the pressure to a board surface pressure of 2.0 MPa after the hot press is closed; at the same time, raise the temperature to make the temperature of the hot press reach 140°C, maintain the temperature for 25 min, and then use cold water to cool the hot press; after the hot press is cooled to 50°C, open the hot press, and take out a bamboo strip substrate board, where the bamboo strip substrate board has a thickness of 25 mm and a density of 1 g/cm³.

Place the bamboo strip substrate board in a curing warehouse, stack and store the bamboo strip substrate board for 15 days in the absence of light at 20°C, so that the moisture content of the bamboo strip substrate board is balanced with the moisture content in the air; then cut the cured bamboo strip substrate board into a specified dimension according to the requirements, and place the bamboo strip substrate board in the warehouse for storage, to keep the moisture content of the substrate board balanced.

### 2. Preparation of a bamboo strip floor:

Perform fixed-thickness sanding on the surface of the bamboo strip substrate board to further obtain a bamboo strip substrate board of a precise size; and then use four-sided planing and milling to form a groove for connection on the side of the bamboo strip substrate board, and form a non-sliding groove on the surface of the bamboo strip substrate board; then immerse the bamboo strip substrate board in an anti-corrosion and anti-mold solution composed of, by weight parts, 3 parts of boric acid, 3 parts of borate, 4 parts of sodium fluoride preservative and 40 parts of water for dipping for 20 min, and take out the bamboo strip substrate board and air the bamboo strip substrate board in a natural state.

Coat the surface of the bamboo strip substrate board after the anti-corrosion and anti-mold treatment with a weather-resistant coating twice, and cure the weather-resistant coating into a film in a natural state to obtain a bamboo strip floor.

### Embodiment 2

A process for preparing the bamboo strip substrate board is similar to that of Embodiment 1, and differs in that the thickness of the bamboo strip curtain is 2.5 mm.

A process for preparing the bamboo strip floor is similar to that of Embodiment 1.

### Embodiment 3

A process for preparing the bamboo strip substrate board is similar to that of Embodiment 1 and differs only in that after a bamboo strip board blank is obtained, the bamboo strip board blank and a glue dipping wood veneer are assembled at a thickness ratio of 7:3. The bamboo strip board blank is used as a secondary outer layer and the glue dipping wood veneer as is used as a core layer, stacking is carried out in a consequent stacking mode, and a bamboo strip substrate board is obtained by hot pressing.

A process for preparing the bamboo strip floor is similar to that of Embodiment 1.

### Embodiment 4

A process for preparing the bamboo strip substrate board is similar to that of Embodiment 1 and differs only in that a glue-containing solution is composed of, by weight parts, 75 parts of 45wt% phenolic adhesive, 10 parts of MDI ecological adhesive, 15 parts of sodium fluoride preservative and 40 parts of water.

A process for preparing the bamboo strip floor is similar to that of Embodiment 1.

### Test examples

The density, strength, hardness, water absorption thickness expansion rate and moisture resistance of the bamboo strip floor obtained in Embodiments 1 to 4 were all tested, and the obtained results were in accordance with the requirements of GB/T30364-2013 standard. The water absorption thickness expansion rate was 4-8%. In addition, in order to meet the requirements of national standards, the production of 1 cubic meter of conventional reconsolidated bamboo floor requires the consumption of 1.3 tons of bamboo material, while the production of 1 cubic meter of the bamboo strip floor of the present application requires only 1 ton of bamboo material, and nearly 300 kilograms of bamboo material are saved per cubic meter of floor.

Therefore, the bamboo strip floor obtained by using the preparation method of the present invention has better strength, hardness, dimensional stability and moisture resistance, and the amount of glue used is reduced on this basis, and a preparation process is simplified. Compared with a conventional reconsolidated bamboo floor, the bamboo strip floor reduces production cost, improves weather resistance and is suitable for industrial production. In addition, the bamboo strip floor obtained by using the preparation method according to the present invention has a smooth surface and is dense, and there is no problem of degumming and upwarp after long-time use.

The foregoing descriptions are only preferred embodiments of the present invention. It should be noted that for a person of ordinary skill in the art, several improvements and modifications may further be made without departing from the principle of the present invention. These improvements and modifications should also be deemed as falling within the protection scope of the present invention.

## Claims

1. A method for preparing a bamboo strip substrate board, comprising the following steps:
step (1): placing a bamboo strip curtain in a glue-containing solution for glue dipping and draining glue to obtain a glue-containing bamboo strip curtain;
step (2): drying the glue-containing bamboo strip curtain in the step (1) and then performing assembly to obtain a bamboo strip board blank; and
step (3): subjecting the bamboo strip board blank in the step (2) to hot pressing to obtain a bamboo strip substrate board.

2. The preparation method according to claim 1, wherein the glue-containing solution in the step (1) comprises an adhesive and a preservative; the adhesive is one or more of a phenolic adhesive, a resorcinol-formaldehyde adhesive and an MDI ecological adhesive; and the preservative is a boron-based preservative and/or a fluorine-based preservative.

3. The preparation method according to claim 1, wherein the time of the glue dipping in the step (1) is 5-20 min.

4. The preparation method according to claim 1, wherein the temperature of the drying in the step (2) is 70-90°C, and the drying time is 20-30 min.

5. The preparation method according to claim 1, wherein the density of the bamboo strip substrate board in the step (3) is 0.9-1.05 g/cm³.

6. The preparation method according to claim 1, wherein the temperature of the hot pressing in the step (3) is 140-160°C, and the pressure of the hot pressing is 2-4 MPa.

7. The preparation method according to claim 1 or 6, wherein the ratio of the thickness of the bamboo strip substrate board to the thickness of the bamboo strip board blank in the step (3) is 1:(1.2-1.4).

8. A bamboo strip substrate board, wherein the bamboo strip substrate board is prepared by using the preparation method according to any one of claims 1 to 7.

9. A bamboo strip floor, wherein the bamboo strip floor is obtained by sequentially subjecting the bamboo strip substrate board according to claim 8 to fixed-thickness sanding, surface milling, anti-corrosion and anti-mold treatment, and coating treatment.

10. Application of the bamboo strip floor according to claim 9 as an outdoor flooring material.
